# EUROPEAN PATENT APPLICATION

(11) **EP 1 558 054 A1**
(43) Date of publication of application: **27.07.2005**
(21) Application number: 03758909.0
(22) Date of filing: 24.10.2003
(51) Int. Cl.: H04Q 9/00

(54) **ELECTRIC DEVICE OPERATION STATE CONTROL SYSTEM**

(30) Priority: 24.10.2002 JP 2002309616
(71) Applicant: Kabushiki Kaisha Toshiba, Tokyo 105-8001 (JP); Toshiba Ha Products Co., Ltd., Ibaraki-shi, Osaka 567-0013 (JP); Toshiba Consumer Marketing Corporation, Tokyo 101-0021 (JP)
(72) Inventor: FURUTA, Kazuhiro, Ibaraki-shi, Osaka 567-0013 (JP)
(74) Representative: O'Connell, David Christopher
(86) International application number: PCT/JP2003/013673
(87) International publication number: WO 2004/039118

(57) **Abstract**

An electrical apparatus operation control state system includes communication control means (13, 25, 30, 73) disposed between the electrical apparatus (1, 29, 53) and an operating power supply for the electrical apparatus (1, 29, 53), and operation state switching means (6R, 40, 43, 55, 67R) disposed at the electrical apparatus (1, 29, 53) side for switching an operation state of the electrical apparatus (1, 29, 53) independent of operation in the operation means (4, 6M, 42, 54, 67M). The operation state switching means (6R, 40, 43, 55, 67R) is rendered operable via the communication control means when a remote operated terminal (14, 23) executing an over-the-horizon communication with the communication control means

## Description

### TECHNICAL FIELD

The present invention relates to an electrical apparatus operation state control system for performing over-the-horizon emote control of electrical equipment provided with operation means operated by a user to change an operation state.

### BACKGROUND ART

For example, patent document 1, JP-A-2000-59404, discloses a system for executing centralized control for a plurality of electrical apparatus such as an air conditioner, lighting apparatus, ventilating fan and the like equipped in a residence. Furthermore, patent document 2, JP-A-H05-302749, discloses a system remote-controlling a plurality of air conditioners by wireless and accepting operation by a remote controller.

More specifically, centralized control is carried out for each apparatus by remote operation in patent document 1. However, it is unclear how the relation between the centralized control and manual operation by the user in actual use is processed. Accordingly, for example, when a user operates a switch installed on a wall to turn off a lighting apparatus, it is supposed that the lighting apparatus cannot be remote-controlled.

Furthermore, a user can control each apparatus individually using a remote controller independent of the remote control for centralized control. The "remote controller" generally uses an infrared signal, and the user uses the remote controller within a range in which the objective apparatus can be viewed.

In each of these patent documents, the system for centralized control of the electric apparatus includes the electric apparatus arranged for the system. Accordingly, when the user is desirous of introduction of centralized control system, electric apparatus already installed in the house for use need to be replaced by new ones for system construction. This is uneconomical.

The present invention was made in view of the foregoing circumstance and an object thereof is to provide an electric device operation state control system which uses already installed electric apparatus and can perform over-the-horizon remote operation of the electric apparatus.

### SUMMARY OF THE INVENTION

The present invention provides an electrical apparatus operation control system for controlling an operation state of an electrical apparatus operated by operation means operated by a user for changing an operation state, characterized by communication control means disposed between the electrical apparatus and an operating power supply for the electrical apparatus, operation state switching means disposed at the electrical apparatus side for changing an operation state of the electrical apparatus independent of operation in the operation means, and in that the operation state switching means is rendered operable via the communication control means when a remote operated terminal executing an over-the-horizon communication with the communication control means.

More specifically, the communication control means is disposed between the existing electrical apparatus and the operating power supply of the electrical apparatus, and the operation state changing means is disposed at the electrical apparatus side. By this minimum change, the user operates the remote operated terminal to control the operation state changing means, thereby changing the operation state of the electrical apparatus. Accordingly, the centralized control can exceedingly easily be executed by over-the-horizon remote operation. Furthermore, since the operation state is changed by the operation means previously provided in the electrical apparatus, the convenience can be prevented from being lowered.

In the foregoing description, "the operation means" of the electrical apparatus is previously provided therein and includes one remote operating the electrical apparatus within a range in which the electrical apparatus is visible, for example, such as with use of an infrared remote controller. Furthermore, "the electrical apparatus side" where the operation state switching means is disposed is in the relative positional relation with the remote operation terminal.

### BRIEF DESCRIPTION OF THE DRAWINGS

Fig. 1 shows an arrangement at the electrical apparatus side of the operation state control system in a first embodiment in which the present invention is applied to a lighting apparatus serving as an electrical apparatus;
FIG. 2 shows a switch unit mounted on a wall;
FIG. 3 is a plan view of a terminal device;
FIG. 4 is a block diagram showing an electrical arrangement including the terminal device;
FIG. 5 is a flowchart showing control contents of a control section at the switch unit side;
FIG. 6 is a view similar to FIG. 1, showing the state before the operation state control system is introduced;
FIG. 7 is a view similar to FIG. 3, showing a second embodiment of the invention;
FIG. 8 is an exploded perspective view showing the case where the remote operation unit is interposed between the lighting apparatus and a lighting apparatus connection plug socket disposed on the ceiling of house in a third embodiment of the invention;
FIG. 9 shows an electrical arrangement of the remote operation unit and periphery;
FIG. 10 shows an arrangement of string driving section;
FIG. 11 is a flowchart showing control contents of a control section of a communication control;
FIG. 12 is a view similar to FIG. 8, showing a fourth embodiment of the invention;
FIG. 13 is a view similar to FIG. 9;
FIG. 14 is a sectional view showing an arrangement of remote control section;
FIG. 15 is a perspective view of a table tap in a fifth embodiment of the invention;
FIG. 16 is a view similar to FIG. 1;
FIG. 17 is a flowchart showing an operation state determining process in a sixth embodiment of the invention;
FIG. 18 shows a display of terminal device displaying an operation state of the lighting apparatus transmitted from the control section of communication control;
FIG. 19 is a view similar to FIG. 5, showing a seventh embodiment of the invention;
FIG. 20 is a view similar to FIG. 5, showing an eighth embodiment of the invention; and
FIG. 21 is view similar to FIG. 10, showing a tenth embodiment of the invention.

### BEST MODE FOR CARRYING OUT THE INVENTION

### (First embodiment)

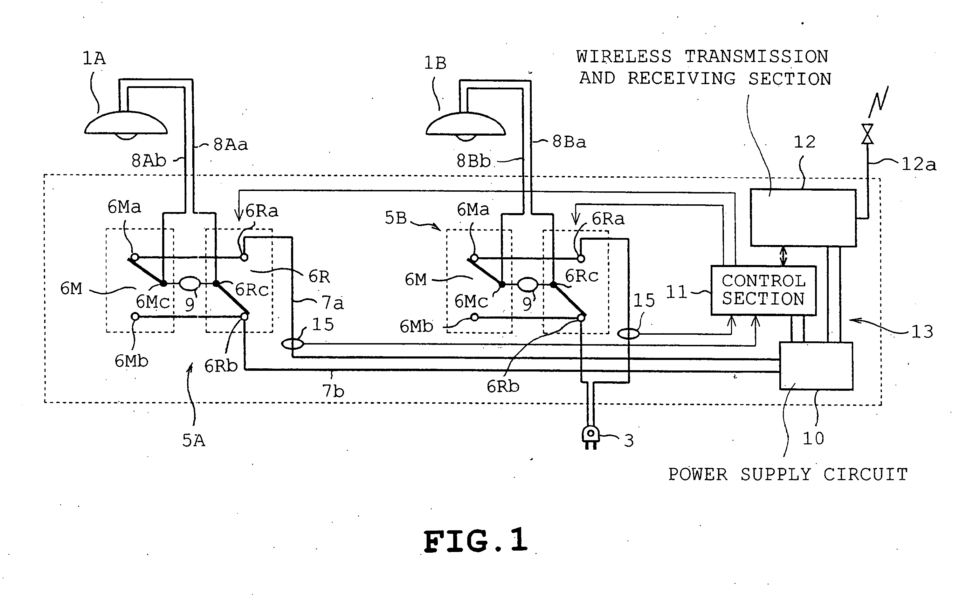

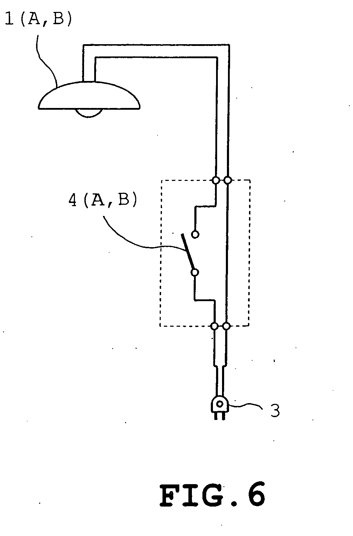

A first embodiment will be described with reference to FIGS. 1 to 6. The present invention is applied to a lighting apparatus serving as an electrical apparatus in the embodiment. FIG. 1 shows an arrangement at the electrical apparatus side of the operation state control system. Lighting apparatuses 1A and 1B are normally turned on and off by wall switches 4 disposed between a power supply plug 3 connected to a commercial AC power supply and the lighting apparatuses as shown in FIG. 6. However, the wall switches (operation means) 4A and 4B have been replaced by control system switch units 5A and 5B.

Each switch unit includes a wall switch 6M (operation means) composed of two fixed contacts 6Ma and 6Mb and one movable contact 6Mc, a remote control switch (operation state switching means) 6R composed of two fixed contacts 6Ra and 6Rb and one movable contact 6Rc. The fixed contacts 6Ma and 6Ra are connected to each other, and the fixed contacts 6Mb and 6Rb are connected to each other. The fixed contacts 6Ma and 6Ra are connected to a power supply line 7a of the power supply plug 3 and the fixed contacts 6Mb and 6Rb are connect to a power supply line 7b of the power supply plug 3. The movable contacts 6Mc and 6Rc are connected to power supply lines 8a and 8b of the lighting apparatus 1 respectively, and an light emitting diode (LED) 9 (power-up state informing means) is connected between the movable contacts 6Mc and 6Rc.

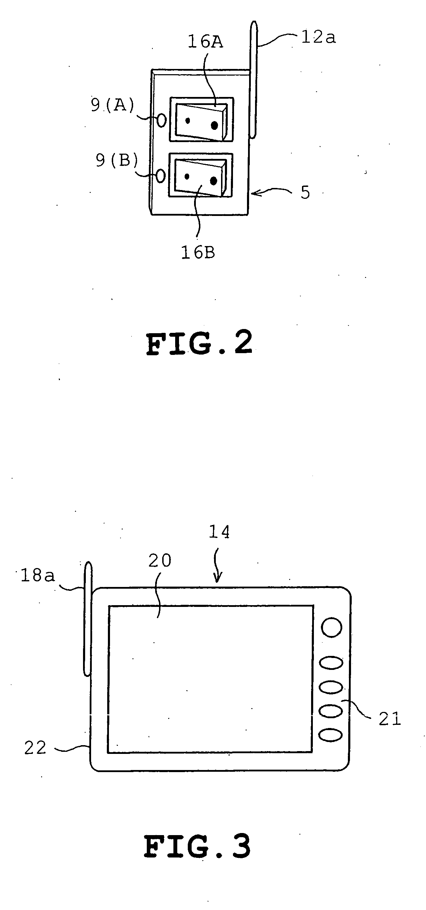

Each of the switch units 5A and 5B includes a power supply circuit 10, a control section 11 and a radio transmission and receiving section 12. The power supply circuit 10, control section 11 and wireless transmission and receiving section 12 constitute a communication control section (communication control means) 13. The power supply circuit 10 includes a rectifier circuit, a DC/DC converter and the like. The power supply circuit 10 rectifies, smoothens and steps down a commercial AC power supplied via the power supply plug 3 thereto, supplying an operating power to the control section 11 and wireless transmission and receiving section 12. The radio transmission and receiving section 12 carries out radio communication (Bluetooth, wireless LAN or other small power wireless system) with a terminal apparatus (remote operation terminal) 14 (see FIG. 3) via an antenna 12a. The wireless transmission and receiving section 12 is capable of executing even over-the-horizon wireless transmission, and communication data is transmitted between the wireless transmission and receiving section 12 and the control section 12.

The control section 11 is comprised of a microcomputer and receives a command via the wireless transmission. When receiving the command via the wireless transmission and receiving section 12 from the terminal apparatus 14, the control section 11 is adapted to switch the movable contact 6Rc of the remote control switch 6R according to the command. Furthermore, current monitors (detecting means) 15 are provided at the power supply line 7a of the power supply plug 3) for the respective lighting apparatuses 1. Each current monitor 15 is comprised of a current transformer. An output signal of the current monitor 15 is supplied to the control section 11.

FIG. 2 illustrates the switch unit 5 mounted on a wall. The switch unit 5 has substantially the same appearance as an ordinary wall switch but differs from the ordinary wall switch in that the antenna 12a of the wireless transmission and receiving section 12 is exposed outward and that two LED' s 9A and 9B are provided. Each of operators 16A and 16B is of the seesaw type. A user manually operates each operator to switch the movable contact 6Mc of each of wall switches 6AM and 6BM. More specifically, even when the wall switch 4 is replaced by the switch unit 5, the user manually operates each operator 16 to turn on or off the lighting apparatus 1. The switch unit 5 is thus the same as the wall switch 4 in this respect. "A" and "B" are eliminated from reference symbols for the switch section 6 in order that presentation of reference symbols is prevented from being troublesome.

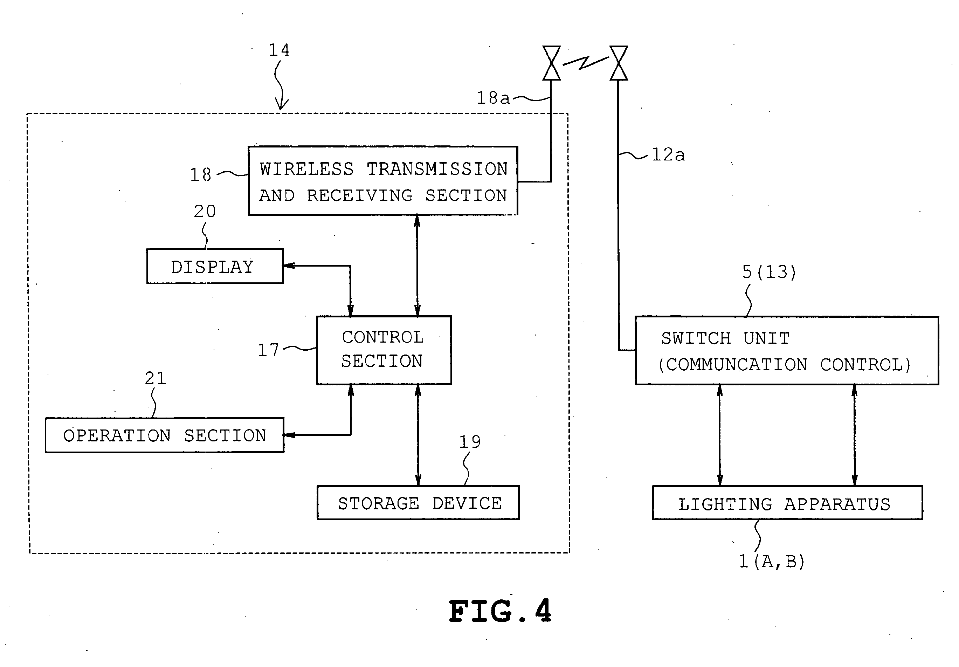

FIG. 3 is a plan view of the terminal device 14, and FIG. 4 is a block diagram showing an electrical arrangement including the terminal device. The terminal device 14 is comprised of a control section 17, wireless transmission and receiving section 18, storage device 19, display 20 and operating section 21. These components are enclosed in a small case 22, which is driven by a battery (not shown) so as to be portable.

The control section 17 is also comprised of a microcomputer and receives an operation signal from an operation section including various operation keys thereby to execute predetermined processes. Furthermore, the control section 17 is designed to communicate with the communication control section 13 of the switch unit 5 via the wireless transmission and receiving section 18 at need. Additionally, the control section 17 carries out display control for the display 20 comprised of a liquid crystal panel, and data is stored on the storage device 19 such as a ROM or RAM if necessary.

Communication between the terminal device 14 and the communication control section 13 needs to have some security in order that the lighting apparatus 1 may be prevented from being operated by an unspecified terminal device. For example, IPv6 (Internet Protocol version 6) may be assigned to terminal device 14 and the communication control section 13 so that a security function of IPv6 is utilized.

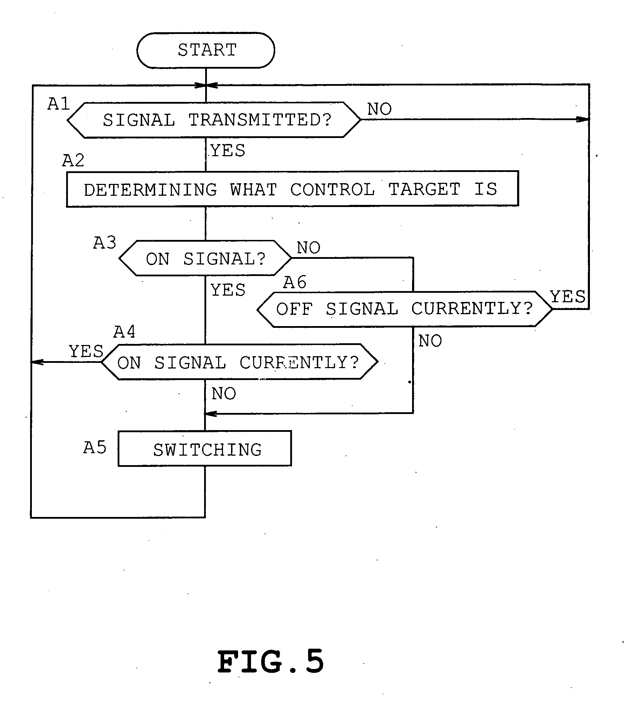

The operation of the embodiment will now be described with further reference to FIG. 5. FIG. 5 is a flowchart showing control contents of a control section at the switch unit side. The control section 11 is on standby until a signal is received from the terminal device 14 side (step A1) . Upon receipt of the signal (YES), a designated object to be controlled is determined (step A2). That is, it is determined which of the lighting apparatuses 1A and 1B has been designated as the object to be controlled.

Subsequently, the control section 11 determines whether the transmitted signal is an ON signal (step A3). When the transmitted signal is an ON signal (YES), the control section 11 refers to an output signal of the current monitor 15 to determine whether the lighting apparatus 1 is currently in an ON state. When no current flowing into the lighting apparatus 1 is detected and the lighting apparatus 1 is not in the ON state currently (NO), the movable contact 6Rc of the remote control switch 6R is switched (step A5).

For example, at this time, when the movable contact 6Mc of the wall switch 6M is at the fixed contact 6Ma side, the movable contact 6Rc of the remote control switch 6R is also at the fixed contact 6Ra side, so that the movable contact 6Rc is switched to the fixed contact 6Rb side. Then, the commercial AC power is supplied to the lighting apparatus 1 so that the apparatus is turned on. Furthermore, since LED 9 is connected between movable contacts 6Mc and 6Rc, LED 9 becomes electrically conductive thereby to be turned on when the polarity at the anode side is positive. As a result, LDE 9 informs the user that the lighting apparatus 1 is conductive. The control section 11 returns to step A1.

Furthermore, when it is determined at step A4 that the lighting apparatus 1 is currently in the ON state (YES) , the user has already operated the operator 16 of the switch unit 5 to turn on the lighting apparatus 1. For example, when the movable contact 6Mc is at the fixed contact Ma side and the movable contact 6Rc is at the fixed contact 6Rb side, the control section 11 does not need to switch the movable contact 6Rc. In this case, the control section 11 returns to step A1.

On the other hand, when it is determined at step A3 that the transmitted signal is not an ON signal (NO), the transmitted signal is an OFF signal. Accordingly, the control section 11 refers to an output signal of the current monitor 15 to determine whether the lighting apparatus 1 is currently in the OFF state (step A6). When current flowing into the lighting apparatus 1 is detected and the lighting apparatus 1 is currently in the ON state (NO) , the control section 11 returns to step A5 where the movable contact 6Rc of the remote control switch 6R is changed so that the lighting apparatus 1 is turned on. Furthermore, when determining at step A6 that the lighting apparatus 1 is in the OFF state (YES), the control section 11 returns to step A1 since the movable contact 6Rc need not be switched.

According to the foregoing embodiment, the communication control section 13 is disposed between the lighting apparatus 1 and the operating power supply (commercial power supply), and the remote operation switch 6R is provided at the lighting apparatus 1 side for changing the operation state independently of the operation of the wall switch 4 (wall switch 6M). The user then operates the terminal device 14 so that the remote operation switch 6 is controllable via the communication control section 13.

More specifically, by executing the minimum change of the arrangement or replacing the wall switch 4 by the switch unit 5, the user operates the terminal device 14 to control the remote operation switch 6R, whereupon the operation state of the lighting apparatus 10 can be switched. Accordingly, the over-the-horizon remote operation can be executed by the existing lighting apparatus 1 such that the centralized control can be carried out for the existing lighting apparatuses 1. Furthermore, the operation state of the lighting apparatus 1 can be carried out using the wall switch 4 (wall switch 6M) previously provided for the lighting apparatus.

Further according to the foregoing embodiment, LED 9 is provided at the lighting apparatus 1 side for informing as to whether power supply is switched on. Consequently, the user can confirm the state of the lighting apparatus 1 even when the operation state of the lighting apparatus has been switched by the remote operation such that the power supply has been turned on or off.

### (Second embodiment)

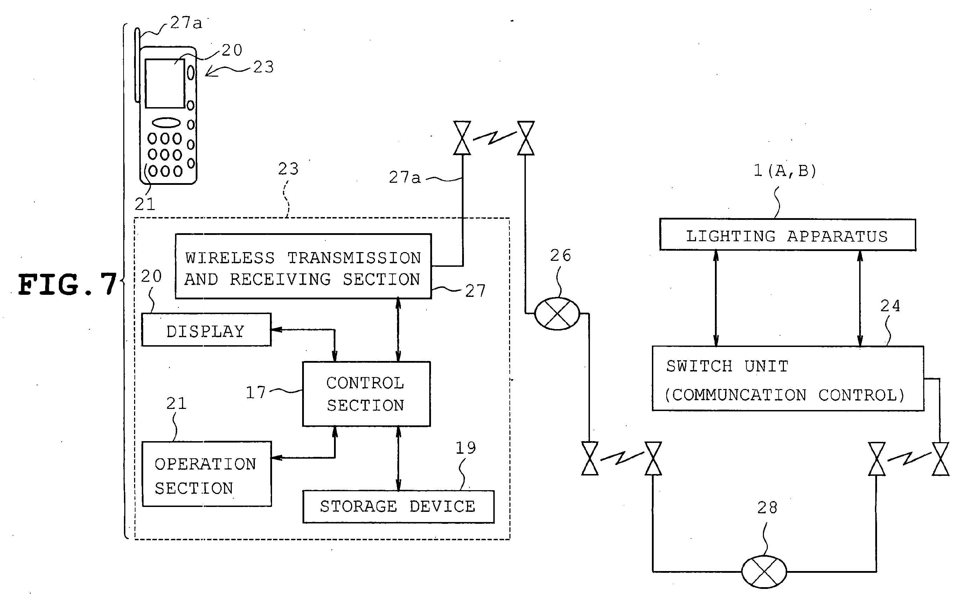

FIG. 7 shows a second embodiment of the invention. Identical or similar parts in the second embodiment are labeled by the same reference symbols as those in the first embodiment and description of these parts is eliminated. Only the difference will be described as follows. In the second embodiment, communication is carried out via a telephone line network (public communication line) 26 between the terminal device (remote operation terminal) 23 side and the communication control section (communication control means) 25 of the switch unit 24 of the lighting apparatus 1 to be controlled.

More specifically, the wireless transmission and receiving. section 27 of the terminal device 23 is provided with a communication function as a portable telephone. An indoor communication network (Bluetooth or wireless LAN, for example) is installed in the house provided with the lighting apparatus 1. The indoor communication network serves as an interface between the telephone line network 26 and the communication control section 25. The other arrangement of the second embodiment is the same as that of the first embodiment.

According to the second embodiment, communication is rendered possible between the communication control section 25 and the terminal device 23 via the telephone line network 26. Accordingly, even when the user is out, he or she can remote operate the operation state of the lighting apparatus 1 by the terminal device 23. For example, when the user goes out of doors with the lighting apparatus 1 turned off and night comes, he or she would desire to turn on the lighting apparatus 1 for prevention of crimes. In this case, the lighting apparatus 1 can be turned on at the place where the user is.

### (Third embodiment)

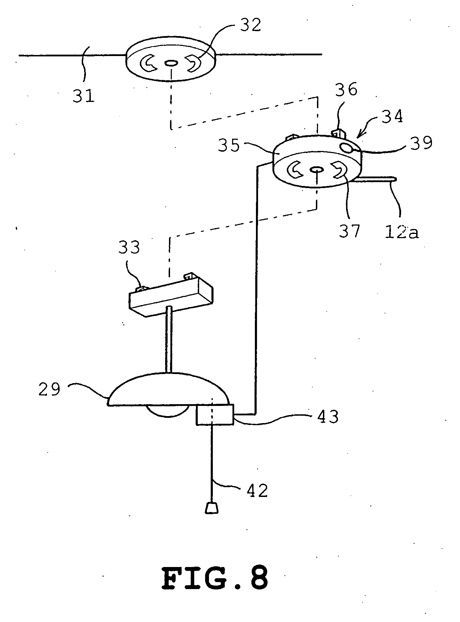

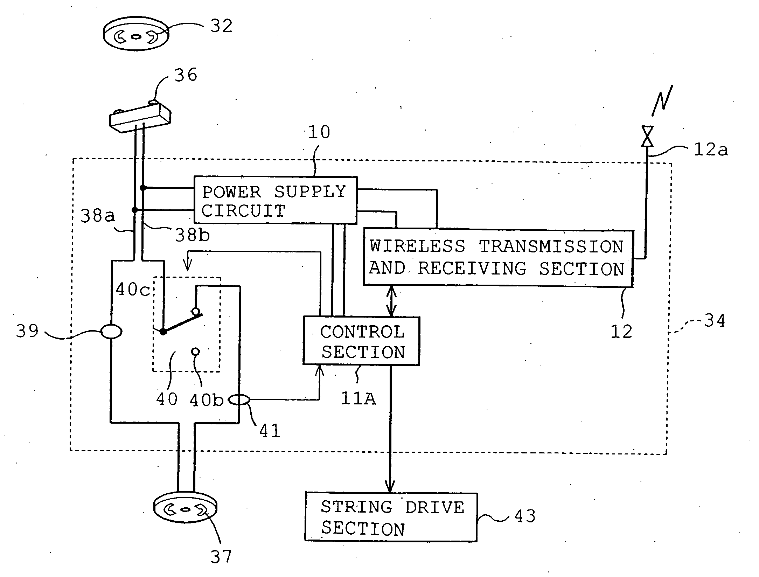

FIGS. 8 to 11 illustrate a third embodiment of the invention. In the first embodiment, the wall switch 4 is replaced by the switch unit 5 so that the operation state control system is constituted. In the third embodiment, a communication control section (communication control means) 30 (see FIG. 9) is externally added to the lighting apparatus (electrical apparatus) 29 so that the system is constructed.

The lighting apparatus 29 is usually connected via a power supply plug to a lighting apparatus connection plug socket 32 disposed on the ceiling 31 of the house as shown in FIG. 8. In the third embodiment, a remote operating unit 34 is interposed between the lighting apparatus 29 and the plug socket 32. The remote operating unit 34 includes a short cylindrical casing 35. The casing 35 has on the top thereof a plug 36 for electrical connection to the plug socket 32 and on the underside thereof a plug socket 37 for receiving the power supply plug 33 of the lighting apparatus 29.

FIG. 9 shows an electrical arrangement of the remote operation unit and its periphery. One power supply line 38a is connected between the plug 36 and the plug socket 37. LED 39 in which two elements are reverse connected across the power supply line 38a. A change-over switch (operation state switching means) 40 and a current monitor (detecting means) 41 are connected to the other power supply line 38b. The change-over switch 40 has a fixed contact 40a connected to the plug socket 37 side and a movable contact 40c connected to the plug 36 side. The fixed contact 40a is open. LED (power-up state informing means) 39 is exposed outside the casing 35 as shown in FIG. 8.

In the casing 35 are enclosed the power supply circuit 10, control section 11A and wireless transmission and receiving section 12, all of which constitute the communication control section 30. The control section 11A has substantially the same function as the control section in the first embodiment. When the ON/OFF command is transmitted from the terminal device 14 regarding the lighting apparatus 29, the control section 11A changes the changeover switch 40 so that the movable contact 40a is switched to the fixed contact 40a or 40b side.

The lighting apparatus 29 is provided with a string (operation means) 42 with which the user directly operates the lighting apparatus. A string drive section (automatic operation means and operation state changing means) 43 is provided for the string 42. The control section 11A delivers a control signal to the string drive section 43. Every time the user pulls the string 42, the operation state of the lighting apparatus 29 is changed circularly from OFF (lights-out), F_ON (high lighting level), H_ON (low lighting level), MINIATURE BULB ON to OFF.

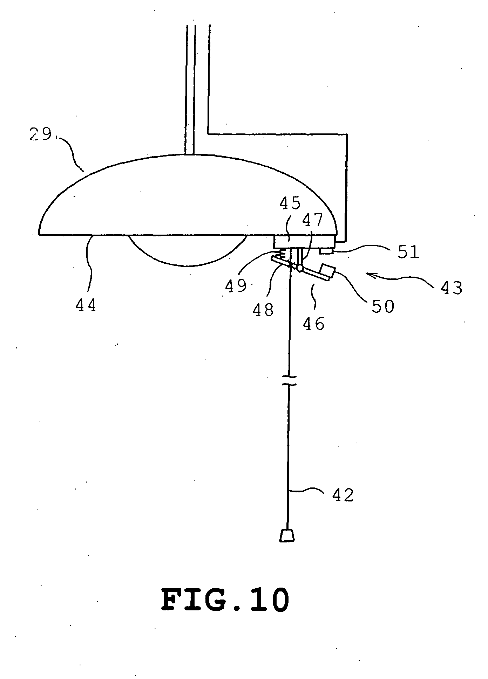

FIG. 10 shows the construction of the string drive section 43. The string drive section 43 includes components mounted on a mounting plate 45 fixed to a shade 44 of the lighting apparatus 1. A seesaw mechanism 46 includes a support pole 47 fixed to the mounting plate 45. A pivot bar 48 is rotatably supported at its central portion by the support pole 47.

A spring 49 is mounted between the left end side of the pivot bar 48 as viewed in FIG. 10 and the mounting plate 45. A magnet 50 is mounted on the right end side of the pivot bar 48. An electromagnet 51 is mounted on the mounting plate 45. The electromagnet 51 is controlled by the control section 11A. Furthermore, a middle portion of the string 42 is wound on a portion of the pivot bar 48 between its left end and the fulcrum of the support pole 47.

More specifically, the left end side of the rotating bar 48 is usually biased upward by a biasing force of the spring 49. When a coil (not shown) of the electromagnet 51 is energized, the electromagnet 51 attracts a magnet 50 at the right end side against the biasing force of the spring 49. Accordingly, the pivot bar 48 pivots about fulcrum counterclockwise, so that the string 42 at the left end side is pulled downward. Furthermore, when the user directly pulls the string 42 downward with his/her hand, the lighting apparatus 29 can be operated in an ordinary manner.

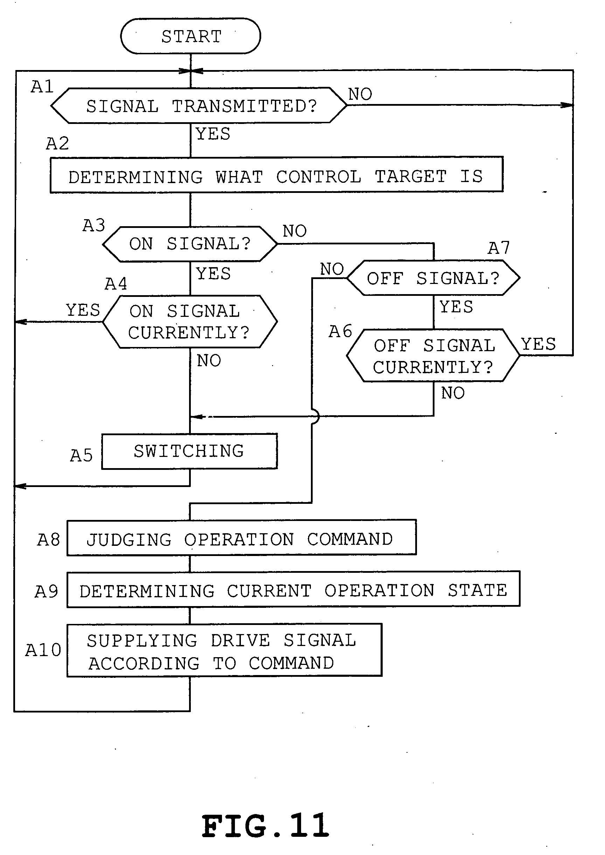

The operation of the third embodiment will be described with further reference to FIG. 11. FIG. 11 is a flowchart showing control contents of the control section 11A including FIG. 5 of the first embodiment and the control contents of the third embodiment. When determining in the negative (NO) at step A3, the control section 11A advances to step A7 to determine whether the signal transmitted from the terminal device 14 is an OFF signal. When the signal is an OFF signal (YES)., the control section 11A returns to step A6. When the signal is not an OFF signal (NO), the control section 11A advances to step A8 to determine what an operation command transmitted from the terminal device 14 is among OFF, F_ON, H_ON and MINIATURE BULB ON. At step A5, the control section 11A changes the movable contact 40c of the changeover switch 40.

Subsequently, the control section 11A advances to step A9 to refer to an output signal of the current monitor 41 thereby to determine what a current operation state is, among OFF, F_ON, H_ON and MINIATURE BULB ON. The control section 11A supplies a drive signal to the electromagnet 51 of the string drive section 43 according to the determined operation state and operation command (step A10) .

For example, in a case where the operation command is H_ON when the current state of the lighting apparatus 29 is MINIATURE BULB ON, the control section 11A energizes the string drive section 43 three times. As a result, the string 42 is pulled downward by the string drive section 43 three times, whereby the operation state of the lighting apparatus 29 is changed over from MINIATURE BULB ON to OFF; F_ON and H_ON. Furthermore, in a case where the operation command is MINIATURE BULB ON when the current state of the lighting apparatus 29 is F_ON, the control section 11A energizes the string drive section 43 twice. The string 42 is then pulled downward twice by the string drive section 43, whereby the operation state of the lighting apparatus 29 is changed over from F_ON to H_ON and MINIATURE BUBLB ON.

According to the third embodiment, the string drive section 43 is disposed together with the string 42 of the lighting apparatus 29 arranged so that the operation state thereof is changeable in a plurality of steps from F_ON to OFF. The string 42 is operable by the remote operation of the terminal device 14. Accordingly, an electrical arrangement need not be changed directly in order that the operation state of the lighting apparatus 29 may be changed independent of the direct operation of the string 42. Consequently, the operation state control system can be arranged more easily. Furthermore, the operation state of the lighting apparatus 29 can easily be changed stepwise by the remote operation.

### (Fourth embodiment)

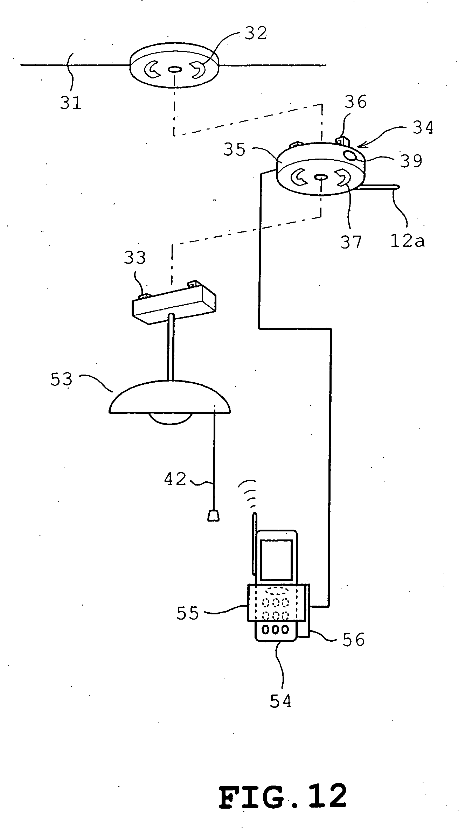

FIGS. 12 to 14 illustrate a fourth embodiment of the invention. Only the difference of the fourth embodiment from the third embodiment will be described. Apart from the direct operation by the string 42, for example, the lighting apparatus (electrical apparatus) employs a remote controller (operation means) 54 utilizing infrared rays so as to be remote operable within sight. More specifically, the lighting apparatus 53 is incorporated with a control unit receiving an infrared signal from the remote controller 54 to change over the operation state.

The lighting apparatus 53, like the lighting apparatus 29 of the third embodiment, changes the operation state from OFF to F_ON, H_ON, MINIATURE BULB ON to OFF circularly every time the user pulls the string 42. Furthermore, the lighting apparatus 54 is arranged so that the operation state can be changed over by the infrared ray signal transmitted from the remote controller 54.

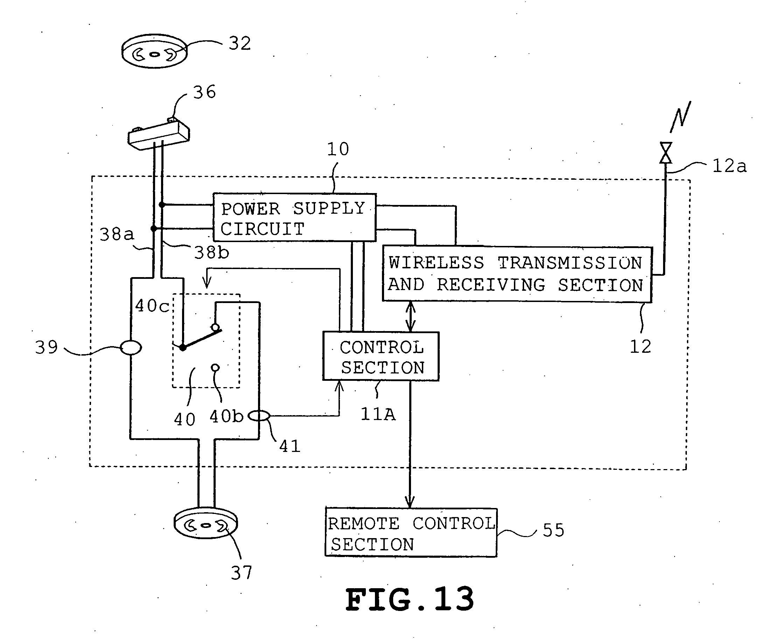

In the fourth embodiment, a remote controller operation section (automatic operation means and operation state switching means) 55 is disposed instead of the drive section 43. More specifically, as shown in FIG. 12, when not operated by the user, the remote controller 54 is accommodated in a holder 56 mounted on a wall of the house or the like. The remote controller 55 is disposed in the holder 56. In FIG. 13 showing the electrical arrangement, the remote operation unit 34 has the same arrangement as that in the third embodiment, and the control section 11A is arranged to supply a drive signal to the remote controller operation section 56 instead of the string drive section 43.

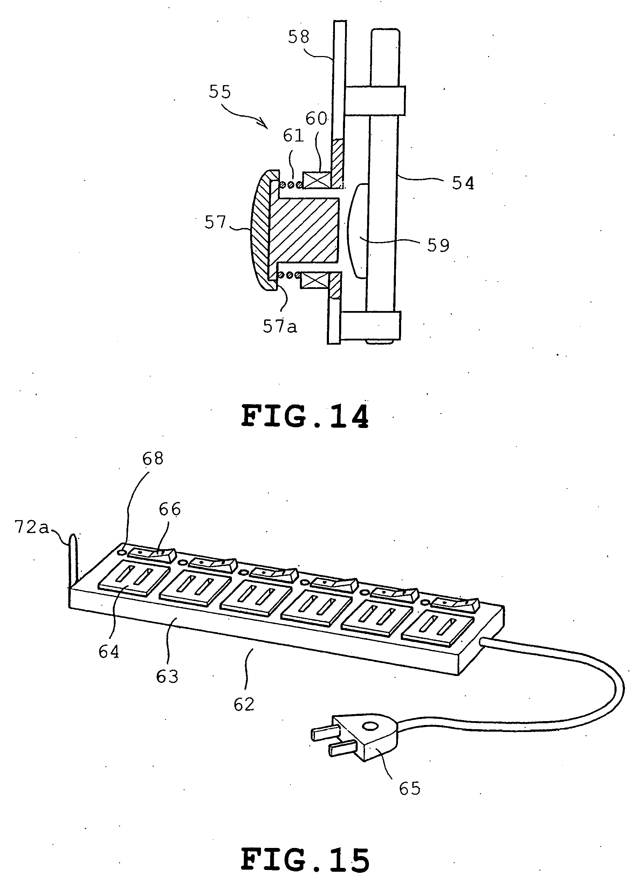

FIG. 14 is a sectional view showing an arrangement of the remote operation section 55. The remote operation section 55 includes an operating member 57 supported by a mounting plate 58. The operating member 57 is disposed so as to correspond to the position of an operation button 59 of the remote controller 54. The operating member 57 is comprised of a magnet, around which a coil 60 is disposed. A spring 61 is disposed between the coil 60 and a flange 57a of the operating member 57. The operating member 57 is usually urged upward (in the direction opposed to the remote controller) by the spring 61 as viewed in FIG. 14.

When the coil 60 is energized by the control section 11A in this state, magnetic field generated by the coil 60 and magnetic field of the operating member 57 repel each other, so that the operating member 57 is displaced downward against the urging force of the spring 61. As a result, the operating member 57 presses the operation button 59 of the remote controller 54.

The remote controller 54 may be designed so that the operation state of the lighting apparatus is changed in the same manner as in the case where the string 42 is pulled downward every time the operation button 59 is depressed downward. Furthermore, the remote controller 54 may be provided with operation buttons 59 which are operated to change the lighting apparatus directly to the respective operations states (of course, the remote controller may be provided with both). In the former case, the control section 11A drives the remote controller operation section 55 as in the flowchart in the third embodiment. Further, in the latter case, the operating members 57 of the remote operation section 55 are disposed so as to correspond to the respective operation buttons 59. The control section 11A determines what of the operating members 57 is to be driven, according to the signal transmitted from the remote controller 54.

According to the fourth embodiment, the remote operation section 55 is disposed in the holder 56 in which the remote controller 54 of the lighting apparatus 53 is accommodated. The operation buttons 59 of the remote controller 54 are operable by remote operation of the terminal device 14. Accordingly, as in the third embodiment, an electrical arrangement need not be changed directly in order that the operation state of the lighting apparatus 29 may be changed independent of the direct operation of the string 42. Consequently, the operation state control system can be arranged more easily. Furthermore, the operation state of the lighting apparatus 29 can easily be changed stepwise by the remote operation.

### (Fifth embodiment)

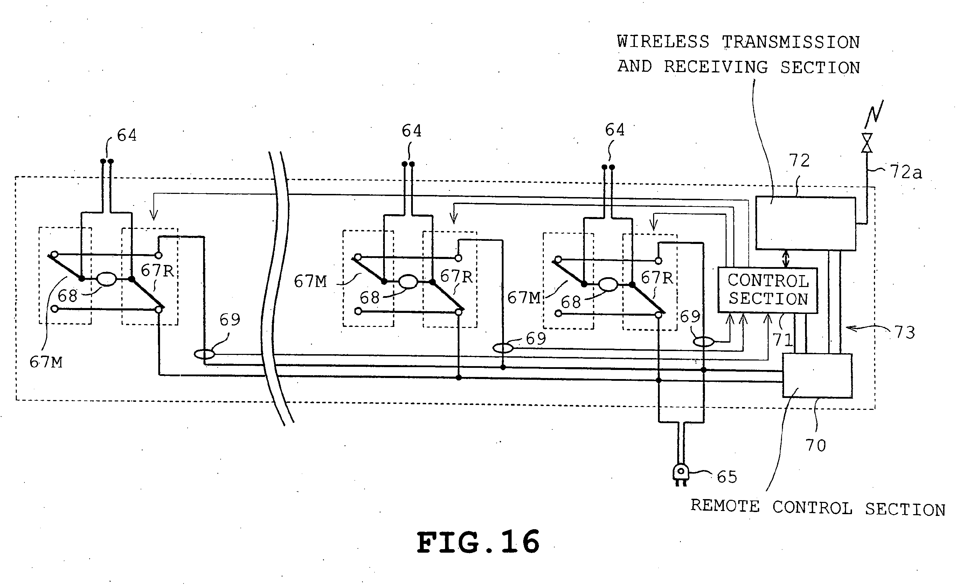

FIGS. 15 and 16 illustrate a fifth embodiment of the invention. Only the difference of the fifth embodiment from the first embodiment will be described. In the fifth embodiment, the communication control section and the like are disposed in a table tap 62. The table tap 62 includes a case 63 in which six power supply plug sockets 64 are enclosed. When the power supply plug 65 is connected to the plug socket of the commercial AC power supply, the AC power is supplied to electrical apparatuses connected to the six power supply plug sockets 64 respectively. Furthermore, seesaw switches 66 are disposed so as to correspond to the power supply plug sockets 64 to change between POWER ON and POWER OFF, respectively.

In FIG. 16 showing the electrical arrangement, the case 6 basically has the same inner electrical arrangement as that in the first embodiment. More specifically, each power supply plug socket 64 includes a manually operated switch (operation means) 67M corresponding to the seesaw switch 66, a remote control switch section (operation state changing means) 67R, LED (power supply state informing means) 68 and a current monitor (detecting means) 69.

Furthermore, in the casing 63 are enclosed a communication control section (communication control means) 73 including a power supply circuit 70, control section 71 and wireless transmission and receiving section (communication control means) 72. LED 68 and an antenna 72a of the wireless transmission and receiving section means 72 are exposed outside the case 63. The control section 71 controls power supply to each power supply plug socket 64 according to a command transmitted from the terminal device 14 independent of the operation by the seesaw switch 66.

According to the fifth embodiment, the remote control switch section 67R and communication control section 73 are disposed in the table tap 62. Consequently, the operation state of the electrical apparatus connected to each power supply plug socket 64 can be changed both by the user directly operating the seesaw switch 66 and by the terminal device 14.

### (Sixth embodiment)

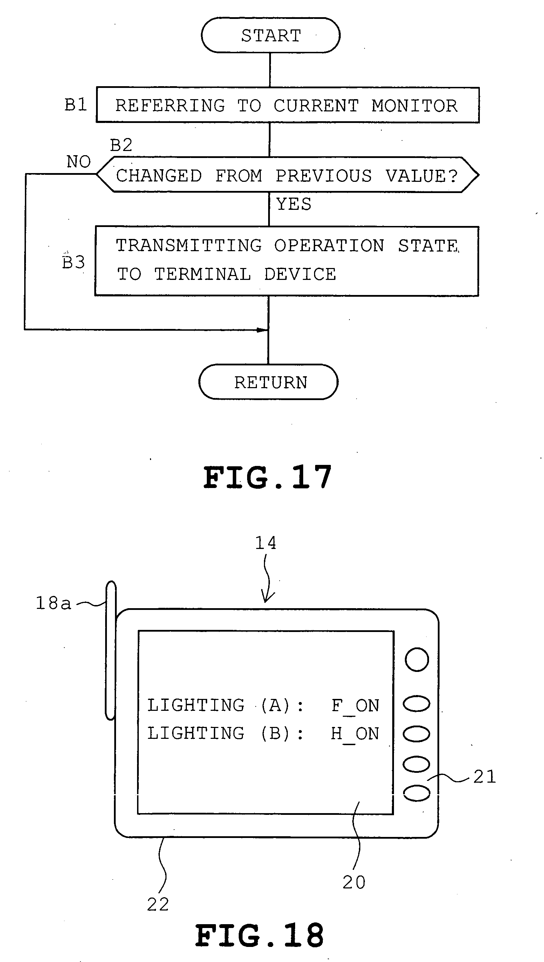

FIG. 16 illustrates a sixth embodiment of the invention. The arrangement of the sixth embodiment is basically the same as that of the first embodiment. The sixth embodiment provides additional processing contents executed by the control section 11 of the communication control section 13 and the control section 17 of the terminal device 14. FIG. 17 is a flowchart showing an operation state determining process executed by the control section 11. The control section 11 carries out the processing at intervals of a predetermined time.

Firstly, the control section 11 refers to the output signal of the current monitor 15 (step B1) to determine whether the current value has changed from the previously referred value (step B2) . When the current value has been changed (YES), the operation state of the lighting apparatus 1 is transmitted to the terminal device 14 (step B3). When the operation state has not been changed (NO) , the control section 11 returns to the main routine. This processing is carried out for each of the lighting apparatuses 1A and 1B.

For example, the following is the relationship between the power consumption and consumed current corresponding to each operation state of the lighting apparatus where the commercial AC power supply voltage is 100 V.

| (Operation state) | (Power consumption) | (Current monitor value) |
|---|---|---|
| F_ON | 100 W | 1.0 A |
| H_ON | 40 W | 0.4 A |
| MINIATURE BULB ON | 5 W | 0.05 A |
| OFF | 0 W | 0 A |

At step B3, the control section 11 transmits operation status of the lighting apparatus 1 corresponding to the current monitor value, to the terminal device 14 side. The terminal device 14 displays, on the display unit (informing means) 20, the operation states of the lighting apparatuses 1A and 1B transmitted from the control section 11, as shown in FIG. 18.

According to the sixth embodiment arranged as described above, the current monitor 6 detects the current flowing into the lighting apparatus 1 and notifies the communication control section 13 of detected current. The communication control section 13 transmits to the terminal device 14 the operation state of the lighting apparatus 1 based on the notified results of current detection. The terminal device 14 informs the user by displaying the information on the display 20. Accordingly, the user can confirm the operation state of the lighting apparatus 1 when carrying out over-the-horizon remote operation.

### (Seventh embodiment)

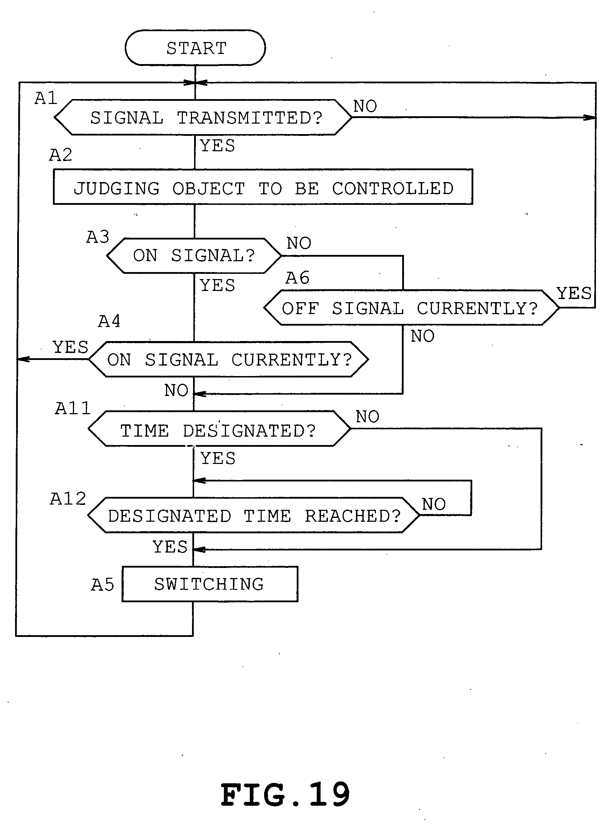

FIG. 19 illustrates a seventh embodiment of the invention. The arrangement of the seventh embodiment is basically the same as that of the first embodiment but slightly differs from that of the first embodiment in software processing. The terminal device 14 is capable of designating a time (predetermined condition) when the control command is executed by the communication control section 13 when the control command is transmitted to the communication control section 13.

When determining in the negative (NO) at steps A4 and A6, the control section 11 determines whether an execution time is designated regarding ON or OFF command (step A11). When no execution time is designated (NO), the control section 11 advances to step A5. When an execution time is designated (YES) , the control section 11 refers to a real time clock (not shown) incorporated therein, being on standby for the designated time (step A12) . The control section 11 advances to step A5 when the designated time has been reached (YES).

According to the seventh embodiment, when receiving from the terminal device 14 the command to change the operation state, the control section 11 of the communication control section 13 executes the command when the designated time has been reached. Accordingly, for example, the arrangement of the seventh embodiment is effective when the user thinks of remote operating the lighting apparatus 1 but desires that the operation of the lighting apparatus will occur later (that is, the remote operation need not be carried out in synchronization with the start of the operation of the lighting apparatus.

Furthermore, for example, for the reason of prevention of crimes, when the lighting apparatuses are turned on in unmanned rooms, lighting may be controlled so as to correspond with an actual user' s life pattern as 21:00: Kitchen: ON, Living: OFF, 24:00: Bedroom: ON and 26:00: Bedroom: OFF. Or, a real control can be realized by periodically turning on lighting in a toilet room. Consequently, prevention of crimes can be improved.

### (Eighth embodiment)

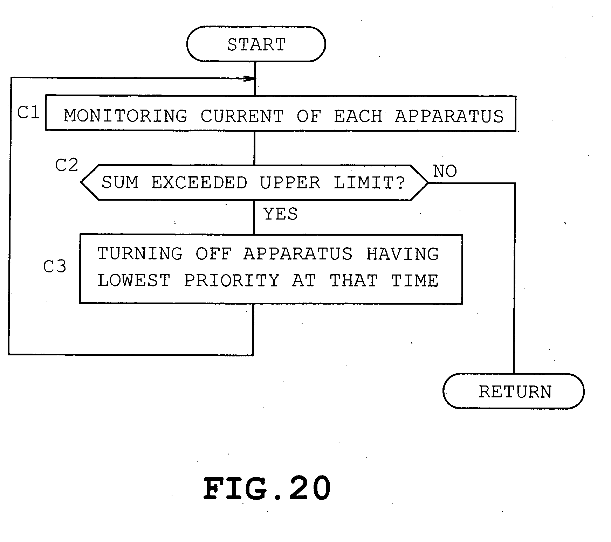

FIG. 20 illustrates an eighth embodiment of the invention. The arrangement of the eighth embodiment is basically the same as that of the first embodiment but slightly differs from that of the first embodiment in software processing. When a plurality of electrical apparatuses are objects to be controlled, the control section 11 of the communication control section 13 monitors the current consumption state of each electrical apparatus by the current monitor 15, thereby controlling the electrical apparatuses.

For example, suppose now a case where the communication control section 13 controls a larger number of lighting apparatuses 1 than in the first embodiment. In FIG. 20 showing control contents of the control section 11, when monitoring the current values of the lighting apparatuses by the current monitor, the control section (step C1), the control section 11 determines whether a total of current values exceeds a predetermined upper limit value (step C2).

When the contract demand of electric power is 30 A, for example, the aforesaid upper limit value is set to a value smaller than the contract demand (for example, 25 A). In this case, when the house is installed with a refrigerator, for example, which is not an object to be controlled by the communication control section 13 and which is usually in operation, a suitable margin is set in consideration of power consumption of the refrigerator.

At step C2, when the sum total of current values is within the upper limit value (NO), the control section 11 returns to the main routine. When the sum total exceeds the upper limit value (YES), power supply is turned off for one with the lowest of a previously set priority sequence of a plurality of lighting apparatuses 1 (step C3). Thereafter, the control section 11 returns to step C1 to repeat the determination at step C2.

The priority sequence is set in the sequence of, from the highest, 1: living room, 2: kitchen, 3: bedroom, 4: passageway, 5: bathroom and 6: toilet room. The lighting apparatus 1 in the toilet room with the lowest priority is turned off first. When the sum total of the current values yet exceeds the upper limit value in this case, the lighting apparatus 1 in the bathroom which currently has the lowest priority is turned off.

According to the eighth embodiment, the current monitors 15 are disposed in a plurality of lighting apparatuses 1 to detect power consumption states respectively. When the sum total of the current values notified by the current monitors 15 exceeds the upper limit value, the control section 11 of the communication control section 13 turns off the lighting apparatus with the lowest priority sequentially. Accordingly, when the remote operation is carried out and the consumed current exceeds the contract demand, a breaker can be prevented from being opened and accordingly, all the electrical apparatus to which power is supplied via the breaker can be prevented from being stopped.

### (Ninth embodiment)

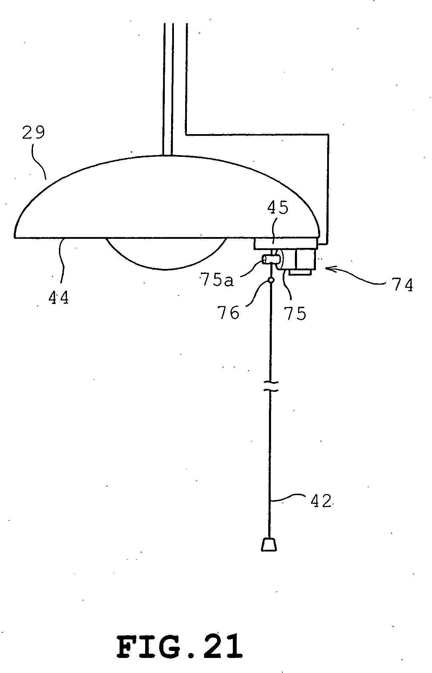

FIG. 21 shows a ninth embodiment of the invention. Identical or similar parts in the ninth embodiment are labeled by the same reference symbols as those in the third embodiment and description of these parts is eliminated. Only the difference will be described as follows. In the ninth embodiment, a string driving section (automatic operation means and operation state switching means) 74 is used instead of the string drive section 43 in the third embodiment. A stepping motor 75 is mounted on the mounting plate 45. The motor 75 has a rotational shaft 75a formed with a hole. The string 42 of the lighting apparatus 29 extends through the hole. A stopper 76 having an outer dimension larger than the diameter of a hole is fixed to a part of the string 42 located slightly below the rotational shaft 75a.

The operation of the ninth embodiment will be described. When the motor 75 receives a drive signal from the control section 11 to be rotated in either direction, a part of the string 42 located below the rotational shaft 75a is wound up. The stopper 76 is then moved gradually toward the rotational shaft 75a. When the stopper 76 abuts against the hole of the rotational shaft 75a, a part of the string 42 located over the rotational shaft 75a is wound up, whereupon the string 42 is pulled downward.

The control section 11 delivers a drive signal which has a predetermined number of pulses, the string 42 is pulled downward by a predetermined amount so that the operation state of the lighting apparatus 29 is changed. Thereafter, the motor 75 is reversed so that the string 42 wound up about the rotational shaft 75a is returned to the initial state. Accordingly, the user can directly pull the string downward by his/her hand so that the lighting apparatus 29 is normally operated.

According to the ninth embodiment, the string drive section 74 is disposed at the string 42 of the lighting apparatus 29 so that the string 42 can be operated by remote operating the terminal device 14. Consequently, the ninth embodiment can achieve the same effect as the third embodiment.

The invention should not be limited to the embodiments described with reference to the accompanying drawings but may be modified or expanded as follows.

The electrical apparatus is not limited to the lighting apparatus but may be an air conditioner, electric fan, television, video recorder, microwave oven or the like. The operation state changing means or automatic operation means is disposed according to an operation manner.

The wall switch 4 need not be replaced by the switch unit 5 in the first embodiment. The wall switch 4 may be used as a wall switch section 6M without replacement. Other necessary components may be incorporated into the wall switch 4.

In the first or other embodiments, the communication antenna may be disposed in the switch unit 5 or the like when no problem arises regarding communication.

The communication system is not limited to the system employing wireless signals but may be a system using the commercial AC power supply. Thus, any system that allows over-the-horizon communication with respect to the electrical apparatus.

The detecting means is not limited to the current monitor but a monitor monitoring voltage, illuminance, temperature or the like.

The display 20 of the terminal device 14 may display guidance regarding the operation of the terminal device 14.

The operating power supply of the electrical apparatus is not limited to the commercial AC power supply but may be a secondary battery.

In the second embodiment, the communication control section may have a function of portable telephone or ordinary telephone so that communication is carried out without aid of the indoor communication network 28

In the third embodiment, a metal serving as a magnetic substance may be disposed instead of the magnet 50 depending upon magnetic force of the electromagnet 50.

In the sixth embodiment, the operation state of the lighting apparatus 1 may be transmitted at intervals of a predetermined time without determination by the control section 11 as to whether the current monitor value has changed from the previous monitor value. Furthermore, the current value may be monitored and transmitted only when the terminal device 14 side requests transmission of the operation state.

In the seventh embodiment, the predetermined condition is not limited to the execution time of the command but may be designation of an elapsed time from transmission of command, for example, 2 hours after transmission of command. In this case, in the case where the apparatus to be controlled is an air conditioner, the air conditioner can be operated so that a suitable temperature is reached in the room when the user gets home, for example. Furthermore, for example, arrangement is made so that the state of a front door of a house is detected. The lighting apparatus may be turned on or voice recorded on a voice recorder may be reproduced on condition that the front door is opened. Thus, if the arrangement can make believe that occupants of the house are now at home, the arrangement is effective.

In the eighth embodiment, when the apparatus to be controlled has a plurality of operation states in the case where power is supplied to the apparatus, as the lighting apparatus 29 in the third embodiment, the power supply does not always need to be turned off. The operation state may be changed so that an amount of consumed current becomes smaller.

In the eighth embodiment, furthermore, power consumption of the electrical apparatus may be detected or determined on the basis of a factor other than current according to the types of electrical apparatus or detecting means.

In the eighth embodiment, furthermore, the priority sequence may be changed dynamically on the basis of the operation state of each electrical apparatus. For example, when a microwave oven is in operation for cooking, the priority sequence may be set so that the microwave oven has a higher priority, whereupon cooking is prevented from being interrupted. Furthermore, when recording is reserved by a video recorder, the highest priority is given to the video recorder.

In the eighth embodiment, additionally, the lowest priority may be given to the electrical apparatus whose operation state has been changed latest. The priority sequence may be rendered higher regarding the electrical apparatus in which the time when the operation state was changed goes back to the past. More specifically, when general service state of an electrical apparatus is taken into consideration, there is an exceedingly low possibility of occurrence of a problem even when an electrical apparatus whose operation was started latest is stopped earlier. Consequently, the priority sequence can be set appropriately. Furthermore, the arrangement is effective when the priority sequence is hard to determine on the basis of the type of the electrical apparatus since a plurality of users simultaneously use the electrical apparatuses.

### Industrial applicability

According to the invention, a system can easily be constructed which can realize an over-the-horizon remote operation for already provided electrical apparatus, such as a lighting apparatus, air conditioner, electric fan, television, video recorder, microwave oven or the like.

## Claims

1. An electrical apparatus operation state control system for controlling an operation state of an electrical apparatus (1, 29, 53) operated by operation means (4, 6M, 42, 54, 67M) operated by a user for switching an operation state,
**characterized by**:
communication control means (13, 25, 30, 73) disposed between the electrical apparatus (1, 29, 53) and an operating power supply for the electrical apparatus (1, 29, 53);
operation state switching means (6R, 40, 43, 55, 67R) disposed at the electrical apparatus (1, 29, 53) side for switching an operation state of the electrical apparatus (1, 29, 53) independent of operation in the operation means (4, 6M, 42, 54, 67M), and in that the operation state switching means (6R, 40, 43, 55, 67R) is rendered operable via the communication control means when a remote operated terminal (14, 23) executing an over-the-horizon communication with the communication control means.

2. The electrical apparatus operation state control system according to claim 1, **characterized in that** the operation state switching means is composed as automatic operation means (43, 55) for automatically operating the operation means of the electrical apparatus.

3. The electrical apparatus operation state control system according to claim 1 or 2, **characterized in that** the electrical apparatus (29, 53) is arranged so that an operation state thereof in power activation is changeable into a plurality of stages.

4. The electrical apparatus operation state control system according to any one of claims 1 to 3, further **characterized by** a power supply state informing unit which is provided at the electrical apparatus side and informs whether the electrical apparatus is connected to a power supply.

5. The electrical apparatus operation state control system according to any one of claims 1 to 4, **characterized in that** the communication control means and the remote operated terminal are communicable via a public communication line.

6. The electrical apparatus operation state control system according to any one of claims 1 to 5, **characterized in that** after receiving a command to change the operation state of the electrical apparatus from the remote operation terminal, the communication control means is capable of executing the instructions when a predetermined condition is met.

7. The electrical apparatus operation state control system according to any one of claims 1 to 6, further **characterized by** detecting means (15, 41, 69) for detecting the operation state of the electrical apparatus and informing the detected operation state to the communication control means and in that the communication control means transmits a result of detection informed by the detecting means to the remote-operated terminal and further **characterized by** informing means (20) for informing the transmitted detection result to the remote operation terminal.

8. The electrical apparatus operation state control system according to any one of claims 1 to 7, **characterized in that** the detecting means (15) are disposed on a plurality of electrical apparatuses for detecting a state of consumed power for each of the electrical apparatuses and the communication control means (13) is capable of controlling the state of consumed power for each of the electrical apparatuses, and when a sum total of the state of consumed power informed by the detecting means exceeds an upper limit value, the communication control means (13) controls so that the consumed power is reduced from the electrical apparatus with a lower priority sequence or stops the operation of the electrical apparatus so that the sum total is limited within an upper limit power or.

9. The electrical apparatus operation state control system according to claim 8, **characterized in that** the communication control means (13) sets the priority sequence of the electrical apparatus whose operation state has been changed latest to lowest and so that the priority sequence becomes higher as the time the operation state was changed.
